# FASCICULE DE BREVET EUROPEEN

(11) **EP 3 934 114 B1**
(45) Date de publication et mention de la délivrance du brevet: **26.07.2023**
(21) Numéro de dépôt: 21181364.7
(22) Date de dépôt: 24.06.2021
(51) Int. Cl.: H04B 3/54, H04W 28/02

(54) **PROCÉDÉ DE RÉGULATION DESTINE À RÉSORBER UN ENGORGEMENT D'UN RÉSEAU MAILLE DE COMMUNICATION PAR COURANTS PORTEURS EN LIGNE**
REGULIERUNGSVERFAHREN ZUR ENTLASTUNG VON STAUS IN EINEM MASCHENNETZ ZUR KOMMUNIKATION ÜBER EINE TRÄGERFREQUENZANLAGE
CONTROL METHOD FOR REDUCING A BLOCKAGE IN A MESH COMMUNICATION NETWORK BY POWERLINE COMMUNICATION

(30) Priorité: 01.07.2020 FR 2006939
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); TERRIEN, Clément, 92500 RUEIL MALMAISON (FR)
(74) Mandataire: Cabinet Le Guen Maillet

(56) Documents cités:
- US-A1- 2013 250 811

## Description

### DOMAINE TECHNIQUE

La présente invention concerne le domaine des réseaux maillés de communication par courants porteurs en ligne et plus précisément un procédé de régulation destiné à résorber un engorgement d'un réseau de communication maillé.

### ETAT DE LA TECHNIQUE ANTERIEURE

Dans un réseau de communication maillé par courants porteurs en ligne PLC (« PowerLine Communications » en anglais) et comportant plusieurs dispositifs noeuds formant une structure maillée, un dispositif noeud source transmet des messages à un dispositif noeud destination par l'intermédiaire de dispositifs noeuds jouant un rôle de relai. Ainsi, un message émis par le dispositif noeud source vers le noeud dispositif destination passe par une route formée par les dispositifs noeuds jouant un rôle de relai jusqu'au dispositif noeud destination. Dans un réseau de communication maillé par courants porteurs en ligne PLC s'appuyant sur un protocole de routage de type réactif, tel que le protocole LOADng (« Lightweight On-demand Ad hoc Distance-vector Routing Protocol - Next Génération » en anglais), un dispositif noeud source découvre une route vers un noeud destination donné en diffusant une requête de découverte de route à travers le réseau de communication maillé. Un message diffusé par un dispositif noeud n'étant en général pas visible en tout point dudit réseau de communication maillé, le dispositif noeud source diffuse la requête de découverte de route à chacun de ses dispositifs noeuds voisins, autrement dit à chaque dispositif noeud se trouvant à la portée du dispositif noeud source dans le réseau de communication maillé. Lesdits dispositifs noeuds voisins transmettent alors à leur tour la requête de découverte de route à leurs dispositifs noeuds voisins respectifs. Dans le cas où un dispositif noeud est directement voisin du dispositif noeud destination, il transmet la requête de découverte de route uniquement vers ledit dispositif noeud destination. Plusieurs requêtes de découverte de route sont ainsi diffusées de proche en proche à travers différents chemins dans le réseau de communication maillé jusqu'à atteindre le dispositif noeud destination. Le dispositif noeud destination sélectionne alors une route optimale parmi les différents chemins en fonction d'informations de coût associées à chaque requête de découverte de route reçue et transmet, via ladite route optimale, une réponse de découverte de route au dispositif noeud source permettant d'activer la route.

Lorsqu'une route entre un dispositif noeud source et un dispositif noeud destination est rompue, le dispositif noeud source tente de réparer la route en diffusant une requête de réparation de route à travers le réseau de communication maillé. Or, lorsque le réseau de communication maillé est perturbé ou que plusieurs routes doivent être réparées simultanément, un tel mécanisme de réparation de routes génère une transmission de nombreuses requêtes de réparation de route dans le réseau de communication maillé et entraîne un engorgement du réseau de communication maillé. D'autres routes peuvent alors être rompues à leur tour, générant la diffusion de nouvelles requêtes de réparation de route et entraînant l'augmentation de l'engorgement du réseau de communication maillé. Par répercussion, le réseau de communication maillé peut alors subir un engorgement pouvant durer jusqu'à plusieurs jours et empêchant la transmission d'autres données que des messages de requêtes de découverte ou de réparation de route.

Le document US 2013/250811 A1 décrit un réseau de routage réactif pouvant être divisé dynamiquement en sous-domaines de réseau de routage réactif comprenant une pluralité de noeuds recevant des requêtes de routes ayant des portées limitées.

Il est alors souhaitable de pallier ces inconvénients de l'état de la technique.

Il est notamment souhaitable de fournir une solution qui permette de résorber rapidement un engorgement du réseau de communication maillé lorsque des routes sont rompues. Il est de plus souhaitable de fournir une solution permettant de privilégier la réparation de routes optimales dans le réseau de communication maillé dans un contexte d'engorgement.

### EXPOSE DE L'INVENTION

Un objet de la présente invention est de proposer un procédé de régulation destiné à résorber un engorgement d'un réseau de communication maillé, le réseau de communication maillé comportant une pluralité de dispositifs noeuds communiquant par courants porteurs en ligne, une requête de route étant émise par un dispositif noeud source et la requête de route étant relayée par diffusion de proche en proche par des dispositifs noeuds intermédiaires vers un dispositif noeud destination, un dispositif noeud intermédiaire pouvant recevoir une ou plusieurs requêtes de découverte de route. Le procédé de régulation est implémenté par un dispositif noeud intermédiaire du réseau de communication maillé et comporte les étapes de :
détecter une situation d'engorgement lorsqu'un nombre de requêtes de route reçues sur une fenêtre temporelle de durée prédéfinie est supérieur à un premier seuil prédéfini ; identifier, lorsqu'une situation d'engorgement est détectée, des requêtes de route comme importantes, une requête de route étant identifiée comme importante lorsque le nombre de ladite requête de route reçue sur la fenêtre temporelle de durée prédéfinie est supérieur à un deuxième seuil prédéfini ; et relayer uniquement des requêtes de route identifiées comme importantes.

Ainsi, il est possible de résorber rapidement un engorgement du réseau de communication maillé tout en permettant de réparer des routes ayant été rompues, et en privilégiant la réparation de routes pour lesquelles un dispositif noeud intermédiaire joue potentiellement un rôle de relai important.

Selon un mode de réalisation particulier, le procédé comporte en outre une étape de : arrêter le relai des requêtes de route identifiées comme importantes lorsqu'un nombre total de requêtes de route identifiées comme importantes et relayées après la détection de la situation d'engorgement atteint un troisième seuil prédéfini.

Ainsi, même lorsqu'un dispositif noeud intermédiaire joue potentiellement un rôle de relai important pour de nombreuses routes dans le réseau de communication maillé, la quantité de requêtes de route relayées par le dispositif noeud intermédiaire lors d'une situation d'engorgement reste limitée, ce qui facilite une résorption rapide du réseau de communication maillé.

Selon un mode de réalisation particulier, l'étape de relayer uniquement des requêtes de route identifiées comme importantes est effectuée en relayant en priorité les requêtes de routes dont le nombre reçu par le dispositif noeud intermédiaire est le plus élevé.

Ainsi, la réparation des routes pour lesquelles le dispositif noeud intermédiaire joue potentiellement le rôle de relai le plus important est privilégiée.

Selon un mode de réalisation particulier, le procédé comporte en outre des étapes de : enregistrer, pour chaque requête de route non relayée, un identifiant du noeud source ayant émis ladite requête de route ; détecter une fin de situation d'engorgement lorsque le nombre de requêtes de route reçues sur la fenêtre temporelle de durée prédéfinie par le dispositif noeud intermédiaire est inférieur au premier seuil prédéfini ; et, lorsqu'une fin de situation d'engorgement est détectée, envoyer à chaque noeud source dont un identifiant est enregistré, une invitation à émettre une nouvelle requête de route.

Ainsi, lorsqu'une route construite ou réparée n'est pas optimale parce que la requête de ladite route n'a volontairement pas été relayée par un dispositif noeud intermédiaire pendant une situation d'engorgement, il est possible d'effectuer une tentative d'amélioration de ladite route après la fin de la situation d'engorgement.

Selon un mode particulier, les requêtes de route sont des requêtes de découverte de route et/ou des requêtes de réparation de route.

L'invention concerne également un programme d'ordinateur, qui comporte des instructions entraînant l'exécution, par un dispositif noeud dans un réseau de communication maillé, du procédé mentionné ci-dessus dans l'un quelconque de ses modes de réalisation, lorsque lesdites instructions sont exécutées par un processeur dudit dispositif noeud.

L'invention concerne également un support de stockage d'informations stockant un programme d'ordinateur comportant des instructions entraînant l'exécution par un dispositif noeud dans un réseau de communication maillé du procédé mentionné ci-dessus dans l'un quelconque de ses modes de réalisation, lorsque lesdites instructions sont lues et exécutées par un processeur dudit dispositif noeud.

L'invention concerne également un dispositif noeud, dit dispositif noeud intermédiaire, destiné à être utilisé dans un réseau de communication maillé, le réseau de communication maillé comportant une pluralité de dispositifs noeuds communiquant par courants porteurs en ligne, le réseau de communication maillé étant tel que, lorsqu'une requête de route est émise par un dispositif noeud source, la requête de route est relayée par diffusion de proche en proche par des dispositifs noeuds vers un dispositif noeud destination, le dispositif noeud intermédiaire pouvant recevoir une ou plusieurs requêtes de route. Le dispositif noeud intermédiaire comporte : des moyens pour détecter une situation d'engorgement lorsqu'un nombre de requêtes de route reçues sur une fenêtre temporelle de durée prédéfinie est supérieur à un premier seuil prédéfini ; des moyens pour identifier, lorsqu'une situation d'engorgement est détectée, des requêtes de route comme importantes, une requête de route étant identifiée comme importante lorsque le nombre de ladite requête de route reçue sur la fenêtre temporelle de durée prédéfinie est supérieur à un deuxième seuil prédéfini ; et des moyens pour relayer uniquement des requêtes de route identifiées comme importantes.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un réseau de communication maillé par courants porteurs en ligne ;
[Fig. 2] illustre schématiquement un procédé de régulation destiné à résorber un engorgement du réseau de communication maillé ;
[Fig. 3] illustre schématiquement un procédé de réparation ultérieure mis en oeuvre à la suite du procédé de régulation destiné à résorber un engorgement du réseau de communication maillé ; et
[Fig. 4] illustre schématiquement un exemple d'architecture matérielle d'un dispositif noeud intermédiaire.

### EXPOSE DETAILLE DE MODES DE REALISATION

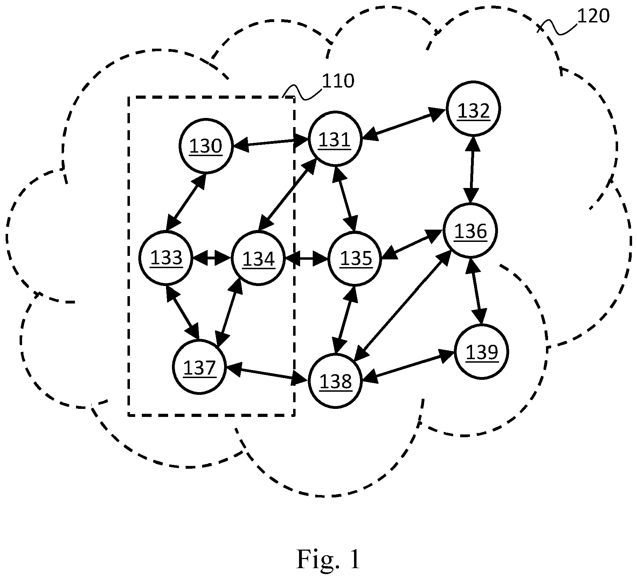

La Fig. 1 illustre schématiquement un réseau de communication maillé 120. Le réseau de communication maillé 120 est par exemple un réseau d'alimentation électrique de type AMM (« Automated Meter Management » en anglais). Le réseau de communication maillé 120 s'appuie sur des communications par courants porteurs en ligne PLC (« PowerLine Communications » en anglais) pour permettre à un dispositif noeud de base (aussi appelé « concentrateur de données ») de collecter, auprès de compteurs électriques intelligents (« smart electricity meters » en anglais), des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication maillé 120. Le réseau de communication maillé 120 peut comporter d'autres dispositifs noeuds, par exemple installés au niveau de transformateurs électriques.

Le réseau de communication maillé 120 a donc une structure maillée, telle que représentée schématiquement sur la Fig. 1 grâce à des flèches, où des dispositifs noeuds jouent le rôle de relais pour augmenter la portée des communications dans le réseau de communication maillé 120, comme détaillé ci-après. Ainsi, un même compteur électrique intelligent dispose potentiellement de plusieurs chemins pour atteindre le concentrateur de données, et vice versa.

La présente invention est ainsi particulièrement adaptée au contexte de la technologie G3-PLC (marque déposée).

Le réseau de communication maillé 120 comporte ainsi une pluralité de dispositifs noeuds 130, 131, 132, 133, 134, 135, 136, 137, 138, 139. A chaque dispositif noeud du réseau de communication maillé 120 est associé un voisinage réseau. Sur la Fig. 1, le dispositif noeud 133 est associé à un voisinage réseau 110 englobant les dispositifs noeuds 130, 134 et 137. En effet, dans le réseau de communication maillé 120, un signal ou un message diffusé par un dispositif noeud (tel que le dispositif noeud 133) n'est en général pas visible en tout point dudit réseau de communication maillé 120. Chaque dispositif noeud émetteur de signaux ou de messages dispose alors d'un voisinage réseau, c'est-à-dire d'un sous-ensemble dudit réseau de communication maillé 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

Le réseau de communication maillé 120 s'appuie sur un protocole de routage de type réactif, tel que le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes ou de réparation de route à la demande, chaque dispositif noeud du réseau ayant alors besoin uniquement d'avoir connaissance de son propre voisinage réseau pour router des données dans le réseau de communication maillé 120.

Pour découvrir ou reconstruire une route appropriée dans le réseau de communication maillé 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). La requête de découverte de route est reçue par chaque dispositif noeud dans le voisinage réseau dudit dispositif noeud source, et qui relaie, par diffusion, ladite requête si ledit dispositif noeud en question n'est pas le dispositif noeud destination. Par diffusion de proche en proche, plusieurs requêtes de découverte de route sont typiquement reçues par le dispositif noeud destination, chacune de ces requêtes ayant suivi un chemin différent dans le réseau de communication maillé 120.

Il en est de même pour les requêtes de réparation de route.

Chaque dispositif noeud qui est à l'origine d'un message, comme par exemple une requête de découverte ou de réparation de route, y inclut un identifiant qui lui est propre, ainsi qu'un numéro de séquence, tel que défini dans le protocole LOADng. Ce numéro de séquence est une valeur de compteur propre à chaque dispositif noeud du réseau de communication maillé 120. A chaque fois qu'un dispositif noeud génère un nouveau message, ledit dispositif noeud incrémente son compteur et inclut dans le message en question la valeur dudit compteur. Ainsi, lorsqu'un dispositif noeud reçoit un message, ledit dispositif noeud analyse l'identifiant du dispositif noeud à l'origine du message et le numéro de séquence inclus dans le message, et peut déterminer si le message reçu est effectivement un nouveau message ou un message déjà reçu.

Les requêtes de réparation et/ou de découverte de route sont appelées par la suite requêtes de route.

Chaque dispositif noeud peut toutefois décider de ne pas relayer la requête de route, lorsqu'un ou plusieurs critères ne sont pas remplis. Notamment, avant de décider de relayer ladite requête de route, le dispositif noeud en question vérifie typiquement si ladite requête de route comporte une information représentative d'un coût de route, depuis le dispositif noeud source jusqu'au dispositif noeud en question, qui est meilleur que le coût de route représenté par une information contenue dans une autre requête de route précédemment reçue par le dispositif noeud en question. En d'autres termes, le dispositif noeud en question relaie, par diffusion, ladite requête de route si ladite requête concerne une route qui a suivi, depuis le dispositif noeud source jusqu'au dispositif noeud en question, un trajet de plus faible coût que toute autre requête de route précédemment reçue par le dispositif noeud en question (donc pour la même découverte ou réparation de route).

Le coût d'une route peut s'appuyer sur une ou plusieurs métriques. Par exemple, le coût de route est un nombre de sauts (« hops » en anglais) subis par requête de route en question depuis le dispositif noeud source. Selon un autre exemple, le coût de route est le résultat d'un calcul qui dépend de la bande passante des liens franchis, par la requête de route en question depuis le dispositif noeud source. Selon encore un autre exemple, le coût de route est proportionnel à la latence subie par la requête de route en question depuis le dispositif noeud source. D'autres métriques peuvent être utilisées pour établir un coût de route, c'est-à-dire un coût de transit, depuis le dispositif noeud source jusqu'au dispositif noeud destination. Lorsqu'un dispositif noeud décide de relayer, par diffusion, la requête de route, le dispositif noeud en question met à jour l'information de coût de route contenue dans ladite requête de route, de manière à prendre en compte que ladite requête de route est passée par le dispositif noeud en question. Ainsi, selon un tel principe, plusieurs requêtes de route parviennent typiquement au dispositif noeud destination, chacune comportant une information de coût de route que ladite requête de route a suivie pour être propagée depuis le dispositif noeud source jusqu'au dispositif noeud destination. Le trajet emprunté par ladite requête de route associée au meilleur coût de route est ensuite sélectionné pour permettre au dispositif noeud source de transmettre des données au dispositif noeud destination. Pour activer la route en question, le dispositif noeud destination transmet une réponse, appelée RREP (« Route REPly » en anglais). Cette réponse est relayée de proche en proche en suivant le chemin inverse de la requête de découverte de route qui était associée au meilleur coût de route. Chaque dispositif noeud recevant la réponse met à jour une table de routage interne, au niveau de la couche liaison (« link layer » en anglais) du modèle ISO (« International Standard Organization » en anglais), afin d'y indiquer que tout message ultérieur transmis en mode point-à-point (« unicast » en anglais) depuis le dispositif noeud source en question vers le dispositif noeud destination en question doit être transmis ou relayé vers tel ou tel dispositif noeud de son voisinage réseau. Au sein de la couche liaison, aussi appelée couche MAC (« Medium Access Control » en anglais), les tables de routage sont préférentiellement implémentées dans une sous-couche d'adaptation en charge de la mise en oeuvre du protocole de routage dans le réseau de communication maillé 120. Par exemple, cette sous-couche d'adaptation est conforme au protocole 6LoWPAN (pour « IPv6 over Low power Wireless Personal Area Networks » en anglais), qui a été initialement développé pour supporter IPv6 dans le cadre du standard IEEE 802.15.4 et qui a été étendu à la technologie G3-PLC (marque déposée). A noter que le protocole 6LoWPAN s'appuie lui-même sur le protocole de routage de type réactif LOADng susmentionné.

Une route entre un dispositif noeud source et un dispositif noeud destination peut être rompue, en raison par exemple de difficultés de routage liées à une perturbation du réseau de communication maillé 120. Un mécanisme de réparation de route est alors initialisé et implique que le dispositif noeud source en question diffuse une nouvelle requête de route, plus précisément une requête de réparation de route comportant un nouveau numéro de séquence. La requête de route étant relayée par diffusion de proche en proche aux dispositifs noeuds du réseau de communication maillé 120, un tel mécanisme de réparation de route augmente le risque de survenue d'une situation d'engorgement du réseau de communication maillé 120, comme déjà expliqué.

Afin d'éviter une telle situation d'engorgement, chaque dispositif noeud peut détecter un début d'engorgement en comparant un débit de requêtes de route (i.e., le nombre de requêtes de route sur une fenêtre temporelle de durée prédéfinie) reçues à un premier seuil prédéfini, appelé seuil de saturation. Tant que le débit reste inférieur au seuil de saturation, le dispositif noeud reste dans un premier mode, dit mode nominal, dans lequel une requête de route reçue est relayée systématiquement par diffusion dans le voisinage réseau dudit dispositif noeud. Lorsque le débit atteint ou dépasse le seuil de saturation, le dispositif noeud passe dans un deuxième mode, dit mode dégradé. Dans le mode dégradé, le dispositif noeud relaie une partie seulement des requêtes de route reçues et limite ainsi le nombre de messages transmis, ce qui permet de réduire l'engorgement du réseau de communication maillé 120.

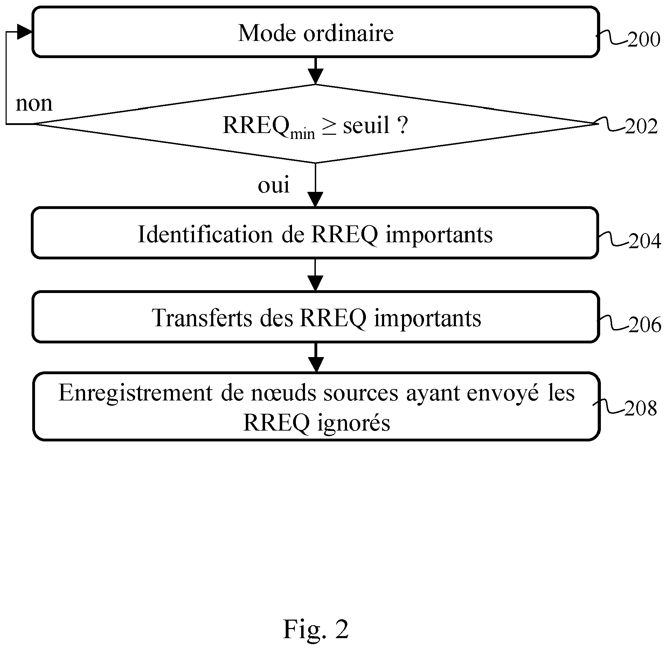

La **Fig. 2** illustre schématiquement un procédé de régulation destiné à résorber un engorgement d'un réseau de communication maillé 120, implémenté par un dispositif noeud, dit dispositif noeud intermédiaire, du réseau de communication maillé 120. Le dispositif noeud intermédiaire est un dispositif noeud du réseau de communication maillé 120 qui reçoit des requêtes de route pour lesquelles ledit dispositif noeud intermédiaire n'est ni le noeud source ni le noeud destination.

Dans une première étape 200, le dispositif noeud intermédiaire est dans le mode nominal. Dans le mode nominal, le dispositif noeud intermédiaire relaie chaque requête de route reçue à son voisinage réseau, ou directement au dispositif noeud destination si ledit dispositif noeud destination appartient au voisinage réseau du dispositif noeud intermédiaire.

Dans une étape 202, le dispositif noeud intermédiaire détermine s'il se trouve dans une situation d'engorgement. Pour cela, le dispositif noeud intermédiaire compare le nombre de requêtes de routes reçues sur une fenêtre temporelle de durée prédéfinie avec le seuil de saturation. La durée prédéfinie est par exemple une minute. Si le nombre de requêtes de route reçues sur la fenêtre temporelle de durée prédéfinie dépasse le seuil de saturation, le dispositif noeud intermédiaire détecte une situation d'engorgement et passe dans le mode dégradé en effectuant une étape 204. Sinon, le dispositif noeud intermédiaire reste dans le mode nominal correspondant à l'étape 200 et continue de relayer par diffusion chaque requête de route reçue.

A l'étape 204, le dispositif noeud intermédiaire identifie des requêtes de route comme importantes afin de favoriser la réparation des routes correspondantes. Une requête de route est considérée comme importante au niveau du dispositif noeud intermédiaire lorsque le nombre de ladite requête de route qui est reçue sur la fenêtre temporelle de durée prédéfinie, ladite requête de route étant émise par le même noeud source et comportant le même numéro de séquence, est supérieur à un deuxième seuil prédéfini, appelé seuil minimal de transmission. En effet, plus le nombre d'une même requête de route reçue par un dispositif noeud intermédiaire est élevé, plus les probabilités que ledit dispositif noeud intermédiaire joue un rôle de relai important pour la route considérée sont élevées. Ainsi, le dispositif noeud intermédiaire peut favoriser, dans une situation d'engorgement, la réparation des routes pour lesquelles ledit dispositif noeud intermédiaire joue potentiellement un rôle de relai important. Dans une étape 206, le noeud dispositif intermédiaire relaie, à son voisinage réseau, les requêtes de route identifiées comme importantes à l'étape 204. Ainsi, le dispositif noeud intermédiaire limite le relai de requêtes de route reçues uniquement aux requêtes de route considérées comme importantes, ce qui permet de limiter l'engorgement du réseau de communication maillé 120 et donc de résorber un engorgement tout en permettant la réparation de routes optimales.

Selon un mode de réalisation particulier, le dispositif noeud intermédiaire relaie les requêtes de routes identifiées comme importantes dans un ordre décroissant en fonction du nombre d'une même requête de route reçue sur la fenêtre temporelle de durée prédéfinie. Autrement dit, une requête de route dont le nombre de requêtes de route reçues est le plus élevé est relayée en priorité. En outre, le dispositif noeud intermédiaire arrête le relai de requêtes de découverte de route identifiées comme importantes lorsqu'un nombre total de requêtes de route diffusées dans le mode dégradé atteint un troisième seuil prédéfini appelé seuil maximal de transmission, et ce, même si une partie des requêtes de route identifiées comme importantes à l'étape 204 n'a pas encore été relayée. Ainsi, même lorsque le dispositif noeud intermédiaire joue potentiellement un rôle de relai important pour de nombreuses routes, la quantité de requêtes de route relayées reste limitée. En outre, le dispositif noeud intermédiaire favorise la réparation des routes pour lesquelles son rôle de relai dans la route considérée est potentiellement le plus important.

Dans une étape 208, le dispositif noeud intermédiaire identifie, pour chaque requête de route reçue et non relayée, le dispositif noeud source ayant émis ladite requête de route. Le dispositif intermédiaire enregistre alors un identifiant de chaque dispositif noeud source ainsi identifié.

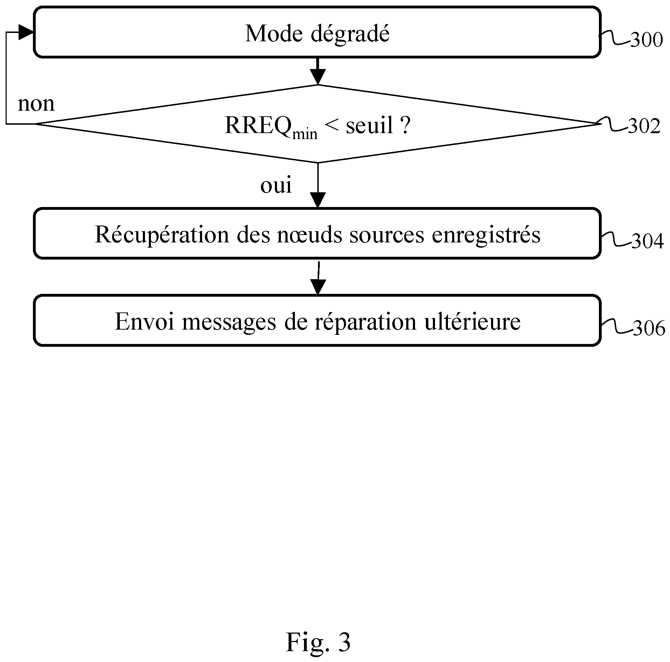

La **Fig. 3** illustre schématiquement un procédé de réparation ultérieure implémenté par un dispositif noeud intermédiaire à la suite du procédé de régulation destiné à résorber un engorgement du réseau de communication maillé 120.

Dans une étape 300, le dispositif noeud intermédiaire est dans le mode dégradé.

Dans une étape 302, le dispositif noeud intermédiaire compare le nombre total de requêtes de route reçues sur la fenêtre temporelle de durée prédéfinie avec le seuil de saturation. Si ledit nombre total de requêtes de route reçues sur la fenêtre temporelle de durée prédéfinie est inférieur au seuil de saturation, le dispositif noeud intermédiaire détecte la fin d'une situation d'engorgement et effectue des étapes 304 et 306 de réparation ultérieure. En outre, le dispositif noeud intermédiaire repasse dans le mode nominal et reprend le relai de chaque requête de route reçue. Ainsi, le dispositif noeud intermédiaire peut détecter la fin d'une situation d'engorgement et reprendre un relai systématique de requêtes de route reçues lorsque l'engorgement du réseau de communication maillé 120 diminue.

Dans le cas contraire, autrement dit si le nombre total de requêtes de route reçues sur la fenêtre de temps de durée prédéfinie est supérieur au seuil de saturation, le dispositif noeud intermédiaire reste dans le mode dégradé correspondant à l'étape 300 et poursuit l'exécution des étapes 204, 206 et 208 décrites précédemment en relation avec la Fig. 2.

A l'étape 304, le dispositif noeud intermédiaire récupère les identifiants enregistrés des noeuds sources ayant émis des requêtes de route qui n'ont pas été relayées dans le mode dégradé. Les identifiants enregistrés correspondent aux identifiants des noeuds sources enregistrés à l'étape 208.

A l'étape 306, le dispositif noeud intermédiaire envoie à chaque noeud source dont l'identifiant a été enregistré un message de suggestion de réparation indiquant qu'une requête de route précédemment émise n'a pas été relayée et invitant à émettre une nouvelle requête de route. Le message de suggestion de réparation comprend des informations identifiant la route.

En effet, puisqu'une requête de route émise par ledit noeud source n'a pas été relayée par le dispositif noeud intermédiaire pendant la situation d'engorgement, il est possible que la route correspondante ayant été choisie n'est pas optimale et que ladite route peut potentiellement être améliorée grâce à l'émission d'une nouvelle requête de route. Chaque message de suggestion de réparation est envoyé par le noeud dispositif intermédiaire à un instant défini par une durée déterminée à partir de la détection de la fin de la situation d'engorgement et comportant un délai minimum auquel s'ajoute une durée aléatoire. Ainsi, les messages de suggestion de réparation sont envoyés à des instants différents, permettant de répartir dans le temps la transmission de messages dans le réseau de communication maillé 120 et d'éviter une nouvelle situation d'engorgement.

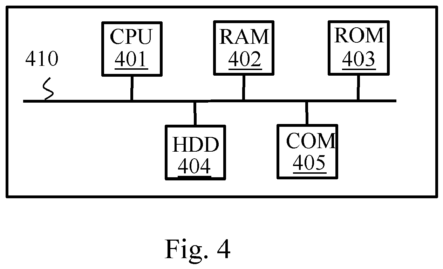

La **Fig. 4** illustre schématiquement l'architecture matérielle d'un dispositif noeud intermédiaire. Le dispositif noeud intermédiaire comporte alors, reliés par un bus de communication 410 ; un processeur ou CPU (« Central Processing Unit » en anglais) 401 ; une mémoire vive RAM 402 ; une mémoire morte ROM (« Read Only Memory » en anglais) 403 ; une unité de stockage 404, telle qu'un disque dur HDD (« Hard Disk Drive » en anglais), ou un lecteur de support de stockage, tel qu'un lecteur de cartes SD (« Secure Digital » en anglais) ; et une interface COM 405 permettant de communiquer avec d'autres dispositifs noeuds du réseau de communication maillé 120.

Le processeur CPU 401 est capable d'exécuter des instructions chargées dans la RAM 402 à partir de la ROM 403, d'une mémoire externe (telle qu'une carte SD), d'un support de stockage, ou d'un réseau de communication. Lorsque le dispositif noeud intermédiaire est mis sous tension, le processeur CPU 401 est capable de lire de la RAM 402 des instructions et de les exécuter. Ces instructions forment un programme d'ordinateur causant l'implémentation, par le processeur CPU 401, de tout ou partie des étapes décrites ici en relation avec le dispositif noeud intermédiaire.

Tout ou partie desdites étapes peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant dédié, tel qu'un FPGA (« Field-Programmable Gate Array » en anglais) ou un ASIC (« Application-Specific Integrated Circuit » en anglais). D'une manière générale, le dispositif noeud intermédiaire comporte ainsi de la circuiterie électronique configurée pour implémenter tout ou partie des étapes décrites ici en relation avec le dispositif noeud intermédiaire.

## Revendications

1. Procédé de régulation destiné à résorber un engorgement d'un réseau de communication maillé (120), le réseau de communication maillé (120) comportant une pluralité de dispositifs noeuds communiquant par courants porteurs en ligne, une requête de route étant émise par un dispositif noeud source et des copies de la requête de route étant relayées par diffusion de proche en proche par des dispositifs noeuds intermédiaires vers un dispositif noeud destination, un dispositif noeud intermédiaire pouvant recevoir une ou plusieurs copies d'au moins une requête de route, le procédé de régulation étant implémenté par un dispositif noeud intermédiaire du réseau de communication maillé (120) et comportant l'étape de :
- détecter une situation d'engorgement (202) lorsqu'un nombre de copies de requêtes de route reçues sur une fenêtre temporelle de durée prédéfinie est supérieur à un premier seuil prédéfini,
Le procédé étant **caractérisé en ce qu'**il comporte en outre les étapes de :
- identifier (204), lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini, et
- relayer uniquement (206) des copies des requêtes de route identifiées comme importantes.

2. Procédé selon la revendication 1, **caractérisé en ce qu'**il comporte en outre une étape de :
- arrêter le relai des copies des requêtes de route identifiées comme importantes lorsqu'un nombre total de copies de requêtes de route identifiées comme importantes et relayées après la détection de la situation d'engorgement atteint un troisième seuil prédéfini.

3. Procédé selon l'une des revendications 1 et 2, **caractérisé en ce que** relayer uniquement des copies des requêtes de route identifiées comme importantes est effectué en relayant en priorité les requêtes de routes dont le nombre de copies reçues par le dispositif noeud intermédiaire est le plus élevé.

4. Procédé selon l'une quelconque des revendications 1 à 3, **caractérisé en ce qu'**il comporte en outre des étapes de :
- enregistrer (208), pour chaque requête de route non relayée, un identifiant du noeud source ayant émis ladite requête de route,
- détecter une fin de situation d'engorgement (302) lorsque le nombre de copies de requêtes de route reçues sur la fenêtre temporelle de durée prédéfinie par le dispositif noeud intermédiaire est inférieur au premier seuil prédéfini,
et **en ce que**, lorsqu'une fin de situation d'engorgement est détectée,
- envoyer (306), à chaque noeud source dont un identifiant est enregistré, une invitation à émettre une nouvelle requête de route.

5. Procédé selon l'une quelconque des revendications 1 à 4, **caractérisé en ce que** les requêtes de route sont des requêtes de découverte de route et/ou des requêtes de réparation de route.

6. Produit programme d'ordinateur, **caractérisé en ce qu'**il comporte des instructions entraînant l'exécution, par un dispositif noeud dans un réseau de communication maillé (120), du procédé selon l'une quelconque des revendications 1 à 5, lorsque lesdites instructions sont exécutées par un processeur dudit dispositif noeud.

7. Support de stockage, **caractérisé en ce qu'**il stocke un programme d'ordinateur comportant des instructions entraînant l'exécution par un dispositif noeud dans un réseau de communication maillé (120) du procédé selon l'une quelconque des revendications 1 à 5, lorsque lesdites instructions sont lues et exécutées par un processeur dudit dispositif noeud.

8. Dispositif noeud, dit dispositif noeud intermédiaire, destiné à être utilisé dans un réseau de communication maillé (120), le réseau de communication maillé (120) comportant une pluralité de dispositifs noeuds communiquant par courants porteurs en ligne, le réseau de communication maillé (120) étant tel que, lorsqu'une requête de route est émise par un dispositif noeud source, des copies de la requête de route sont relayées par diffusion de proche en proche par des dispositifs noeuds vers un dispositif noeud destination, le dispositif noeud intermédiaire pouvant recevoir une ou plusieurs copies d'au moins une requête de route et étant **caractérisé en ce qu'**il comporte :
- des moyens pour détecter une situation d'engorgement (202) lorsqu'un nombre de copies de requêtes de route reçues sur une fenêtre temporelle de durée prédéfinie est supérieur à un premier seuil prédéfini,
- des moyens pour identifier (204), lorsqu'une situation d'engorgement est détectée, des requêtes de route comme importantes, une requête de route étant identifiée comme importante lorsque le nombre de copies de ladite requête de route reçues sur la fenêtre temporelle de durée prédéfinie est supérieur à un deuxième seuil prédéfini, et
- des moyens pour relayer uniquement (206) des copies des requêtes de route identifiées comme importantes.

## Patentansprüche

1. Regulierungsverfahren zur Entlastung von Staus in einem Maschenkommunikationsnetz (120), wobei das Maschenkommunikationsnetz (120) eine Vielzahl von Knotenvorrichtungen umfasst, die über leitungsgebundene Trägerströme kommunizieren, wobei eine Routenanforderung von einer Quellknotenvorrichtung ausgesendet wird und Kopien der Routenanforderung durch Verbreitung durch Zwischenknotenvorrichtungen Zug um Zug zu einer Zielknotenvorrichtung weitergeleitet werden, wobei eine Zielknotenvorrichtung eine oder mehrere Kopien mindestens einer Routenanforderung empfangen kann und das Regulierungsverfahren durch eine Zwischenknotenvorrichtung des Maschenkommunikationsnetzes (120) implementiert wird und den Schritt umfasst:
- Erkennen einer Stausituation (202), wenn eine Anzahl von Kopien von Routenanforderungen, die über ein Zeitfenster einer vordefinierten Dauer empfangen wird, größer als ein erster vordefinierter Schwellenwert ist,
wobei das Verfahren **dadurch gekennzeichnet ist, dass** es außerdem die Schritte umfasst:
- Identifizieren (204) von Routenanforderungen als wichtig, wenn eine Stausituation erkannt wird, wobei die Routenanforderung als wichtig identifiziert wird, wenn die Anzahl von Kopien der Routenanforderung, die über das Zeitfenster einer vordefinierten Dauer empfangen wurden, größer als ein zweiter vordefinierter Schwellenwert ist; und
- Weiterleiten (206) nur der Kopien der als wichtig identifizierten Routenanforderungen.

2. Verfahren nach Anspruch 1, **dadurch gekennzeichnet, dass** es außerdem einen Schritt umfasst:
- Anhalten der Weiterleitung der Kopien der als wichtig identifizierten Routenanforderungen, wenn eine gesamte Anzahl von Kopien, die als wichtig identifiziert und nach Erkennung der Stausituation weitergeleitet werden, einen dritten Schwellenwert erreicht.

3. Verfahren nach einem der Ansprüche 1 und 2, **dadurch gekennzeichnet, dass** Weiterleiten nur der Kopien der als wichtig identifizierten Routenanforderungen durchgeführt wird, indem prioritär die Routenanforderungen weitergeleitet werden, deren Anzahl von Kopien, die durch die Zwischenknotenvorrichtung empfangen werden, am höchsten ist.

4. Verfahren nach einem der Ansprüche 1 bis 3, **dadurch gekennzeichnet, dass** es außerdem Schritte umfasst:
- Speichern (208) einer Kennung des Quellknotens, der die Routenanforderung ausgesendet hat, für jede nicht weitergeleitete Routenanforderung,
- Erkennen eines Endes der Stausituation (302), wenn die Anzahl von Kopien von Routenanforderungen, die über das Zeitfenster einer vordefinierten Dauer durch die Zwischenknotenvorrichtung empfangen wird, kleiner als der vordefinierte erste Schwellenwert ist,
und dass bei Erkennen eines Endes der Stausituation,
- Senden (306) einer Aufforderung, eine neue Routenanforderung auszusenden, an jeden Quellknoten, dessen Kennung gespeichert ist.

5. Verfahren nach einem der Ansprüche 1 bis 4, **dadurch gekennzeichnet, dass** die Routenanforderungen Anforderungen zur Entdeckung einer Route und/oder Anforderungen zur Reparatur einer Route sind.

6. Computerprogrammprodukt, **dadurch gekennzeichnet, dass** es Anweisungen umfasst, die die Ausführung des Verfahrens nach einem der Ansprüche 1 bis 5 durch eine Knotenvorrichtung in einem Maschenkommunikationsnetz (120) bewirken, wenn die Anweisungen von einem Prozessor der Knotenvorrichtung gelesen und ausgeführt werden.

7. Speichermedium, **dadurch gekennzeichnet, dass** es ein Computerprogramm speichert, das Anweisungen umfasst, die die Ausführung des Verfahrens nach einem der Ansprüche 1 bis 5 durch eine Knotenvorrichtung in einem Maschenkommunikationsnetz (120) bewirken, wenn die Anweisungen von einem Prozessor der Knotenvorrichtung gelesen und ausgeführt werden.

8. Knotenvorrichtung, Zwischenknotenvorrichtung genannt, die dazu bestimmt ist, in einem Maschenkommunikationsnetz (120) verwendet zu werden, wobei das Maschenkommunikationsnetz (120) eine Vielzahl von Knotenvorrichtungen umfasst, die über leitungsgebundene Trägerströme kommunizieren, wobei das Maschenkommunikationsnetz (120) so beschaffen ist, dass Kopien der Routenanforderung durch Verbreitung durch Zwischenknotenvorrichtungen Zug um Zug zu einer Zielknotenvorrichtung weitergeleitet werden, wenn eine Routenanforderung durch ein Quellknotenvorrichtung ausgesendet wird, wobei die Zwischenknotenvorrichtung eine oder mehrere Kopien mindestens einer Routenanforderung empfangen kann und **dadurch gekennzeichnet ist, dass** sie umfasst:
- Mittel zum Erkennen einer Stausituation (202), wenn eine Anzahl von Kopien von Routenanforderungen, die über ein Zeitfenster einer vordefinierten Dauer empfangen wird, größer als ein erster Schwellenwert ist,
- Mittel zum Identifizieren (204) von Routenanforderungen als wichtig, wenn eine Stausituation erkannt wird, wobei eine Routenanforderung als wichtig identifiziert wird, wenn die Anzahl von Kopien der Routenanforderung, die über das Zeitfenster einer vordefinierten Dauer empfangen wurden, größer als ein zweiter vordefinierter Schwellenwert ist; und
- Mittel zum Weiterleiten (206) nur der Kopien der als wichtig identifizierten Routenanforderungen.

## Claims

1. Regulation method intended to reduce congestion on a mesh communication network (120), the mesh communication network (120) comprising a plurality of node devices communicating by powerline, a route request being sent by a source node device and the route request being relayed by gradual broadcasting by intermediate node devices to a destination node device, an intermediate node device being able to receive one or more copies of at least one route discovery requests, the regulation method being implemented by an intermediate node device of the mesh communication network (120) and comprising the step of:
- detecting a congestion situation (202) when a number of copies of route requests received over a time window of predefined duration is higher than a predefined first threshold.
The method being **characterised in that** it further comprises the steps of:
- identifying (204), when a congestion situation is detected, route requests as being important, a route request being identified as important when the number of copies of said route request received over the time window of predefined duration is above a second predefined threshold, and
- relaying solely (206) copies of the route requests identified as important.

2. Method according to claim 1, **characterised in that** it further comprises a step of:
- stopping the relaying of copies of the route requests identified as important when a total number of copies of route requests identified as important and relayed after the congestion situation is detected reaches a predefined third threshold.

3. Method according to claims 1 and 2, **characterised in that** relaying solely copies of the route requests identified as important is performed by relaying as a priority the route requests the number of which received by the intermediate node device is the highest.

4. Method according to any one of claims 1 to 3, **characterised in that** it further comprises steps of:
- recording (208), for each route request not relayed, an identifier of the source node that sent said route request,
- detecting an end of a congestion situation (302) when the number of copies of route requests received over the time window of predefined duration by the intermediate node device is lower than the predefined first threshold,
and **in that**, when an end of congestion situation is detected,
- sending (306), to each node device an identifier of which is recorded, an invitation to send a new route request.

5. Method according to any one of claims 1 to 4, **characterised in that** the route requests are route discovery requests and/or route repair requests.

6. Computer program product, **characterised in that** it comprises instructions causing the execution, by a node device in a mesh communication network (120), of the method according to any one of claims 1 to 5, when said instructions are executed by a processor of said node device.

7. Storage medium, **characterised in that** it stores a computer program comprising instructions causing the execution by a node device in a mesh communication network (120) of the method according to any one of claims 1 to 5, when said instructions are read and executed by a processor of said node device.

8. Node device, referred to as an intermediate node device, intended to be used in a mesh communication network (120), the mesh communication network (120) comprising a plurality of node devices communicating by powerline, the mesh communication network (120) being such that, when a route request is sent by a source node device, copies of the route request are relayed by gradual broadcasting by node devices to a destination node device, the intermediate node device being able to receive one or more copies of a route request, and being **characterised in that** it comprises:
- means for detecting a congestion situation (202) when a number of copies of route requests received over a time window of predefined duration is higher than a predefined first threshold,
- means for identifying (204), when a congestion situation is detected, route requests as being important, a route request being identified as important when the number of copies of said route request received over the time window of predefined duration is higher than a predefined second threshold, and
- means for relaying solely (206) copies of the route requests identified as important.
